# EUROPÄISCHE PATENTSCHRIFT

(11) **EP 0 418 561 B1**
(45) Veröffentlichungstag und Bekanntmachung des Hinweises auf die Patenterteilung: **19.01.1994**
(21) Anmeldenummer: 90115788.3
(22) Anmeldetag: 17.08.1990
(51) Int. Cl.: H01G 9/00

(54) **Festelektrolytkondensator in Chip-Bauweise und Verfahren zum Herstellen**
Solid electrolytic chip capacitor and method of manufacture
Condensateur à électrolyte solide sous forme de chip et son procédé de fabrication

(30) Priorität: 19.09.1989 DE 3931245
(43) Veröffentlichungstag der Anmeldung: 27.03.1991
(73) Patentinhaber: SIEMENS AKTIENGESELLSCHAFT, 80333 München (DE)
(72) Erfinder: Schnabel, Werner, Dr. Dipl.-Phys., D-7921 Nattheim (DE)

(56) Entgegenhaltungen:
- EP-A- 0 130 001
- DE-A- 2 230 629
- GB-A- 2 125 623
- US-A- 4 483 062

## Beschreibung

Die Erfindung betrifft einen Festelektrolytkondensator in Chip-Bauweise mit einem gesinterten Anodenkörper aus einem Ventilmetall, einer auf dem Ventilmetall aufgebrachten, als Dielektrikum dienenden Oxidschicht, einem in den Anodenkörper eingesinterten Anodendraht, einem als Kathode dienenden Festelektrolyt, einem Anodenanschluß, einem Kathodenanschluß mit einem den Anodenkörper teilweise umgreifenden U-förmigen Hilfsbügel und einer Kunststoffumhüllung.

Ein derartiger Kondensator ist aus der US 4 483 062 bekannt. Dabei umgreift der U-förmige Hilfsbügel den Anodenkörper und bewirkt, daß der Körper bei der Montage seitlich geführt wird.

Beim Verschweißen des Anodendrahtes mit dem Anodenanschluß besteht allerdings die Gefahr, daß der Anodenkörper aus dem Hilfsbügel herausgedrückt wird. Diese mögliche Verschiebung muß bei der späteren Umhüllung mit einem Kunststoff berücksichtigt werden, damit der Anodenkörper auf jeden Fall innerhalb der Kunststoffumhüllung angeordnet wird. Dies führt dazu, daß die Außenabmessungen des Chips größer sind als eigentlich erforderlich wäre.

Aus der US-PS 4497105 ist es zwar bekannt, bei einem Kondensator der eingangsgenannten Art einen weiteren Hilfsbügel gegenüber dem ersten U-förmigen Hilfsbügel anzuordnen, jedoch verhindert der zusätzliche Hilfsbügel auch nicht eine Bewegung des Anodenkörpers in vertikaler Richtung.

Aufgabe der Erfindung ist es, einen Festelektrolytkondensator in Chip-Bauweise der eingangs genannten Art anzugeben, der möglichst kleine Außenabmessungen besitzt.

Diese Aufgabe wird bei einem Festelektrolytkondensator in Chip-Bauweise der eingangs genannten Art erfindungsgemäß dadurch gelöst, daß der Kathodenanschluß einen weiteren den Anodenkörper teilweise umgreifenden Hilfsbügel besitzt, der gegenüber dem U-förmigen Hilfsbügel angeordnet ist.

Ein Verfahren zum Herstellen eines derartigen Festelektrolytkondensators ist Gegenstand des Anspruchs 2.

Der Gegenstand der Erfindung wird anhand des folgenden Ausführungsbeispiels näher erläutert.

In der dazugehörenden Zeichnung zeigen
- FIG 1: eine Seitenansicht des Kondensators,
- FIG 2: eine Draufsicht auf den Kondensator und
- FIG 3: ein Montageverfahren.

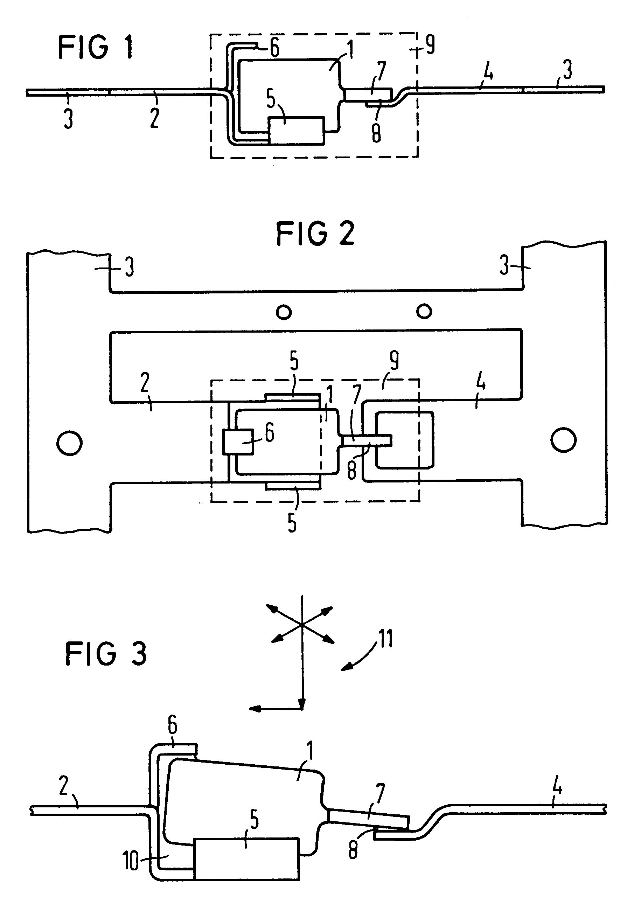

In der FIG 1 ist ein gesinterter Anodenkörper 1 dargestellt, der aus einem Ventilmetall, wie z.B. Tantal besteht. Als Kathode dient ein Festelektrolyt, z. B. halbleitendes Mangandioxid. Der Sinterkörper 1 ist in einem Kathodenanschluß 2 angeordnet, der Teil eines Trägerbandes 3 ist, an dem ebenfalls der Anodenanschluß 4 angebracht ist. Der Kathodenanschluß 2 besitzt einen U-förmig gebildeten Hilfsbügel 5, der den Sinterkörper 1 teilweise seitlich umgreift. Gegenüber dem U-förmigen Hilfsbügel 5 ist ein weiterer Hilfsbügel 6 angeordnet, der die Auslenkung des Sinterkörpers 1 nach oben begrenzt, wenn beispielsweise die Schweißverbindung 8 zwischen Anodendraht 7 und Anodenanschluß 4 hergestellt wird. Der Anodendraht 7 besteht aus dem gleichen Material wie der Anodenkörper 1, d.h. bei einem Tantalkondensator ebenfalls aus Tantal.

Durch die Anordnung des oberen Hilfsbügels 6 wird gewährleistet, daß der Anodenkörper 1 bei Anbringen einer Kunststoffumhüllung 9 auf jeden Fall innerhalb der Umhüllung 9 angeordnet ist. Die Wandstärke der Umhüllung 9 wird nur vom Abstand zwischen U-förmig gebogenen Hilfsbügel 5 und oberen Hilfsbügel 6 bestimmt.

In der FIG 2 ist eine Draufsicht auf einen Kondensator dargestellt, aus der ersichtlich ist, daß Kathodenanschluß 2 und Anodenanschluß 4 an einem kontinuierlichen Trägerband 3 angeordnet sind.
In der FIG 3 ist ein Montageverfatiren zur Herstellung eines Festelektrolytkondensators in Chip-Bauweise dargestellt. Der Sinterkörper 1 wird dabei vorteilhafterweise durch einen sogenannten Pick-and-Place-Automaten in das durch Kathodenanschluß 2 und Anodenanschluß 4 gebildet "Nest" eingelegt. Der Bewegungsablauf des Pick-and-Place-Automaten bei der Positionierung des Anodenkörpers 1 ist durch die Pfeile 11 gekennzeichnet.

Die auf dem Sinterkörper 1 angeordnete Kathodenkontaktierung ist mittels des Lotes 10 mit dem Kathodenanschluß verbunden.

In der FIG 3 ist zu erkennen, daß selbst bei Auslenkung des Anodenkörpers 1 eine Begrenzung dieser Bewegung durch den oberen Hilfsbügel 6 gewährleistet ist.

Die Herstellung der Sinteranodenkörper bis zur Herstellung der Kathodenkontaktierung, z.B. einer Silberleitlackschicht, erfolgt beispielsweise nach dem aus der DE 27 40 745 C2 bekannten Verfahren. Hierbei werden die Anodenkörper an Haltevorrichtungen befestigt und weiterverarbeitet. Da der exakte Abstand der Anoden an der Haltevorrichtung keine Voraussetzung des Montageverfahrens ist, kann der kleinstmögliche Abstand gewählt werden.

Es ist vorteilhaft, den Anodenkörper vor dem Montieren in das Trägerband zu verzinnen. Diese Maßnahme hat bei der Montage die Vorteile, daß die Anoden einen besseren mechanischen Schutz vor Beschädigung aufweisen, daß eine bessere automatische Handhabbarkeit beim Pick-and-Place-Vorgang vorliegt und daß schließlich ein besseres Benetzen bei einem Reflow-Löten auch nach längerer Zwischenlagerung gewahrleistet ist.

Dadurch ergibt sich eine höhere Fertigungssicherheit, was die Voraussetzung für hohe Ausbeute und gleichmäßig hohen Qualitäts- und Zuverlässigkeitsstandard der Bauelemente ist.

Die Verzinnung der Anoden ist in den automatischen Fertigungsablauf integrierbar und geschieht folgendermaßen, daß zunächst die Anoden mit einer Lötpaste beschichtet werden, einem Reflow-Löten (IR- oder Vapor-phase-Verfahren) unterzogen werden und daß danach die Anoden von der Haltevorrichtung abgetrennt und geordnet magaziniert werden. Statt der Magazinierung ist auch die spätere geordnete Bereitstellung über ein Rüttlersystem möglich. Die Verfahrensschritte können vorzugsweise mit Hilfe eines Roboters durchgeführt werden, der einzelne Haltevorrichtungen der Reihe nach verarbeitet:
- Entnahme einer Haltevorrichtung mit Anoden aus dem Halterahmen,
- Beschichten der Anoden mit Lötpaste,
- Reflow-Löten der Paste mit dem Vapor-Phase-Verfahren, wobei das überschüssige Flußmittel abtropft, so daß keine zusätzliche Reinigung erforderlich ist,
- Abschneiden und Magazinierung der Anoden.

Die Genauigkeit und Geschwindigkeit moderner Pick-and-Place-Automaten zusammen mit der inzwischen erreichten Flexibilität bezüglich der Handhabung unterschiedlicher, auch extrem kleiner Objekte, macht diese Geräte auch für die Montage von Festelektrolyt-Chipkondensatoren geeignet.

Die restlichen Fertigungsschritte wie Umhüllen, Trennen, Biegen der Anschlüsse, Endformieren, Prüfen usw. erfolgen dann in der üblichen Weise.

Zusammenfassend lassen sich folgende wesentliche Vorteile des angeführten Montageverfahrens für Chipkondensatoren anführen:
- höhere Anodendichte pro Haltevorrichtung in der Vorfertigung,
- mechanischer Schutz der Anoden durch Verzinnen der Anoden vor der Montage,
- geordnetes Bereitstellen der Anoden,
- sichere Positionierung der Anoden durch fortlaufendes Trägerbandsystem mit speziell geformten Hilfsbügeln,
- Aufbringen einer Lötpaste für die Kontaktierung der Kathode,
- Positionieren des Anodenkörpers auf dem Trägerband mit einem Pick-and-Place-Automaten,
- Anschweißen des Anodendrahtes unmittelbar nach der Positionierung des Körpers,
- Reflow-Löten des Kathodenanschlusses (unmittelbar nach der Positionierung oder in einem separaten Arbeitsschritt), wobei das Reflow-Löten gleichzeitig mit dem Anschweißen des Anodendrahtes erfolgen kann oder anschließend im Durchlaufverfahren (IR- oder Vapor-Phase) durchgeführt wird.

## Patentansprüche

1. Festelektrolytkondensator in Chip-Bauweise mit einem gesinterten Anodenkörper (1) aus einem Ventilmetall, einer auf dem Ventilmetall aufgebrachten, als Dielektrikum dienenden Oxidschicht, einem in den Anodenkörper (1) eingesinterten Anodendraht (7), einem als Kathode dienenden Festelektrolyt, einem Anodenanschluß (4), einem Kathodenanschluß (2) mit einem den Anodenkörper teilweise umgreifenden U-förmigen Hilfsbügel (5) und einer Kunststoffumhüllung (9),
**dadurch gekennzeichnet**,
daß der Kathodenanschluß einen weiteren den Anodenkörper (1) teilweise umgreifenden Hilfsbügel (6) besitzt, der gegenüber dem U-förmigen Hilfsbügel (5) angeordnet ist.

2. Verfahren zum Herstellen von Festelektrolytkondensatoren in Chip-Bauweise nach Anspruch 1 mit folgenden Verfahrensschritten:
a) Herstellung der Anodenkörper (1) mit Festelektrolyt und Kathodenkontaktierung,
b) Verzinnen der Anodenkörper (1),
c) Vereinzeln der Anodenkörper (1),
d) Montage mit Hilfe eines Pick-and-Place-Automaten auf ein Trägerband (3) mit Kathoden- (2) und Anodenanschlüssen (4) unter Verwendung von Kathodenanschlüssen (2) mit jeweils einen den Anodenkörper (1) teilweise umgreifenden U-förmigen Hilfsbügel (5) und einen weiteren den Anodenkörper (1) teilweise umgreifenden Hilfsbügel (6) der gegenüber dem U-förmigen Hilfsbügel (5) angeordnet ist,
e) Anschweißen (8) der Anodendrähte (7) an die Anodenanschlüsse (4),
f) Anlöten (10) der Kathodenanschlüsse (2),
g) Umhüllen der Kondensatoren mit einem Kunststoff (9).

## Claims

1. Solid-electrolyte capacitor with chip structure, comprising a sintered anode body (1) made of a valve metal, an oxide layer applied to the valve metal and serving as dielectric, an anode wire (7) sintered into the anode body (1), a solid electrolyte serving as cathode, an anode connection (4), a cathode connection (2) having a U-shaped auxiliary clip (5) partly encompassing the anode body and a plastic envelope (9), characterized in that the cathode connection has a further auxiliary clip (6) which partly encompasses the anode body (1) and which is disposed opposite the U-shaped auxiliary clip (5).

2. Method of manufacturing solid-electrolyte capacitors with chip construction according to Claim 1, comprising the following method steps:
a) Manufacture of the anode bodies (1) with solid electrolyte and cathode contacting,
b) Tinning of the anode bodies (1),
c) Separation of the anode bodies (1),
d) Assembly, with the aid of an automatic pick-and-place machine, on a carrier strip (3) having cathode connections (2) and anode connections (4) using cathode connections (2) having a U-shaped auxiliary clip (5), which partly encompasses the anode body (1), and a further auxiliary clip (6) which partly encompasses the anode body (1) and which is disposed opposite the U-shaped auxiliary clip (5),
e) Welding (8) of the anode wires (7) onto the anode connections (4),
f) Soldering-on (10) of the cathode connections (2),
g) Encapsulation of the capacitors with a plastic (9).

## Revendications

1. Condensateur à électrolyte solide sous forme de Chip, comportant une pièce anodique (1) frittée constituée d'un métal valve, une couche d'oxyde déposée sur le métal valve et servant de diélectrique, un fil (7) d'anode incorporé par frittage dans la pièce (1) anodique, d'un électrolyte solide servant de cathode, une borne (4) d'anode, une borne (2) de cathode ayant un étrier (5) auxiliaire en forme de U entourant partiellement la pièce anodique et un enrobage (5) en matière plastique,
caractérisé,
en ce que la borne de cathode possède un étrier auxiliaire (6) supplémentaire entourant partiellement la pièce anodique (1) et disposé en regard de l'étrier (5) auxiliaire en forme de U.

2. Procédé de fabrication de condensateurs à électrolyte solide sous forme de chip suivant la revendication 1 par les stades de procédés suivants :
a) préparation de la pièce (1) anodique ayant de l'électrolyte solide et un contact de cathode,
b) étamage de la pièce (1) anodique,
c) individualisation de la pièce (1) anodique,
d) montage à l'aide d'un automate Pick-and-Place sur une bande (3) support ayant des bornes de cathode et d'anode (4) en utilisant des bornes (2) de cathode ayant chacune un étrier (5) auxiliaire en forme de U entourant partiellement la pièce (1) anodique et un étrier (6) auxiliaire supplémentaire entourant partiellement la pièce (1) anodique et disposé en regard de l'étrier (5) auxiliaire en forme de U,
e) soudage des fils (7) d'anode aux bornes (4) d'anode,
f) brasure (10) des bornes (2) de cathode,
g) enrobage des condensateurs par une matière plastique (9).
